# EUROPEAN PATENT APPLICATION

(11) **EP 4 779 942 A1**
(43) Date of publication of application: **22.07.2026**
(21) Application number: 23952667.6
(22) Date of filing: 21.09.2023
(51) Int. Cl.: H04L 41/0866, H04W 24/02

(54) **NETWORK PROBLEM SOLUTION VERIFICATION METHOD, APPARATUS AND SYSTEM**

(71) Applicant: HUAWEI TECHNOLOGIES CO., LTD., Shenzhen 518129 (CN)
(72) Inventor: ZHAO, Mingyu, Shenzhen, Guangdong 518129 (CN); YAN, Xueqiang, Shenzhen, Guangdong 518129 (CN); XI, Yan, Shenzhen, Guangdong 518129 (CN); WANG, Junfan, Shenzhen, Guangdong 518129 (CN)
(74) Representative: Epping - Hermann - Fischer
(86) International application number: PCT/CN2023/120513
(87) International publication number: WO 2025/060011

(57) **Abstract**

Embodiments of this application provide a method and system for verifying a solution to a network problem, and an apparatus, to improve reliability of the solution corresponding to the network problem obtained by a user. The method includes: obtaining an identifier of a service to which a first network problem belongs; determining, from a knowledge graph based on the identifier of the first network problem, a first solution corresponding to the first network problem; sending a first verification instruction to a device configured with a digital twin network, where the first verification instruction instructs the device configured with the digital twin network to simulate execution of the first solution corresponding to the first network problem; and receiving a first verification result from the device configured with the digital twin network, where the first verification result is a result obtained by the device configured with the digital twin network in executing the first solution corresponding to the first network problem.

## Description

### TECHNICAL FIELD

Embodiments of this application relate to the communication field, and more specifically, to a method and system for verifying a solution to a network problem, and an apparatus.

### BACKGROUND

A large language model (large language model, LLM) is an artificial intelligence model that trains a large amount of data sets and can perform a wide range of tasks. When parameters of the LLM exceed a specific scale, unexpected capabilities are generated, such as a language understanding capability, an intent understanding capability, and a multi-round dialog memory capability.

In the mobile communication field, there are many network problems related to operation and maintenance and optimization. The LLM can output solutions to the network problems. However, the LLM stores knowledge through network parameters. An inference process of the LLM is a "black box", that is, the process is unexplainable. In the mobile communication field with an extremely high reliability requirement, the solutions to the network problems output by the LLM have low reliability.

### SUMMARY

Embodiments of this application provide a method and system for verifying a solution to a network problem, and an apparatus, to improve reliability of the solution corresponding to the network problem obtained by a user.

To achieve the foregoing objective, this application uses the following technical solutions.

According to a first aspect, a method for verifying a solution to a network problem is provided. The method may be performed by a device configured with a knowledge graph, or may be performed by a component of a device configured with a knowledge graph, for example, a processor, a chip, or a chip system of the device configured with the knowledge graph, or may be implemented by a logical module or software that can implement all or a part of functions of a device configured with a knowledge graph. For example, the method may be performed by a device configured with a knowledge graph. The method includes: receiving, from a management and control center, an identifier of a service to which a first network problem belongs; determining, from the knowledge graph based on the identifier of the first network problem, a first solution corresponding to the first network problem, where the knowledge graph includes solutions to a plurality of network problems output by a large language model LLM, the first network problem is one of the plurality of network problems, and the first solution is one of one or more solutions corresponding to the first network problem; sending a first verification instruction to a device configured with a digital twin network, where the first verification instruction instructs the device configured with the digital twin network to simulate execution of the first solution corresponding to the first network problem; and receiving a first verification result from the device configured with the digital twin network, where the first verification result is a result obtained by the device configured with the digital twin network in executing the first solution corresponding to the first network problem.

In the method for verifying the solution to the network problem provided in this embodiment of this application, both the first network problem and the first solution are output by the LLM, and the LLM has a powerful capability of outputting a network problem and a corresponding solution, so that the device configured with the knowledge graph can construct a complete knowledge graph based on the network problem and the corresponding solution that are output by the LLM. Further, the device configured with the digital twin network verifies a solution in the knowledge graph, and feeds back a verification result to the device configured with the knowledge graph, so that the device configured with the knowledge graph can further update the knowledge graph. This can improve reliability of a solution corresponding to a network problem obtained by a user.

In this embodiment of this application, the first verification result indicates that the first network problem is resolved, and the method further includes: sending first feedback information to the management and control center, where the first feedback information indicates that a verification service corresponding to the first network problem is completed. In this embodiment of this application, the first verification result indicates that the first network problem is not resolved, and the method further includes: determining, from the knowledge graph based on the identifier of the service to which the first network problem belongs, a second solution corresponding to the first network problem, where the second solution is one of the one or more solutions corresponding to the first network problem; sending a second verification instruction to the device configured with the digital twin network, where the second verification instruction instructs the device configured with the digital twin network to simulate execution of the second solution corresponding to the first network problem; and receiving a second verification result from the device configured with the digital twin network, where the second verification result is a result obtained by the device configured with the digital twin network in executing the second solution corresponding to the first network problem. In other words, in this embodiment of this application, when the first verification result indicates that the first network problem is not resolved, the device configured with the knowledge graph may indicate the device configured with the digital twin network to verify another solution.

In a possible implementation, the method further includes: updating the knowledge graph based on the first verification result.

In a possible implementation, updating the knowledge graph based on the first verification result includes: increasing or decreasing, based on the first verification result, a weight corresponding to the first solution in the knowledge graph, or updating a topology structure of the knowledge graph based on the first verification result. In this solution, the device configured with the knowledge graph can update the knowledge graph based on the first verification result. This can therefore further improve reliability of a solution corresponding to a network problem in the knowledge graph.

In a possible implementation, the LLM is obtained through training based on a plurality of problem pairs, or the LLM is obtained through training based on a plurality of problem pairs and a score of a solution corresponding to each network problem, the score is obtained by inputting the solution corresponding to each problem into the device configured with the digital twin network for simulation, and the problem pairs include a network problem in a network management dataset and a solution corresponding to the network problem. In other words, in this solution, a device configured with the LLM may train the LLM model based on the plurality of problem pairs in the network management dataset, so that the LLM model can output solutions to the plurality of network problems, and construct the knowledge graph. Alternatively, a device configured with the LLM may obtain the LLM model through training based on the plurality of problem pairs and the score of the solution corresponding to each problem, so that the LLM model can output solutions to the plurality of network problems. The score corresponding to each solution is introduced in an LLM model training process. Therefore, the LLM model obtained through training can be more reliable, and the solutions to the plurality of network problems output by the LLM model are more reliable.

In a possible implementation, the first verification result indicates that the first network problem is resolved, and the method further includes: sending first indication information to the management and control center, where the first indication information indicates the management and control center to apply the first solution to a real network; receiving second feedback information from the management and control center, where the second feedback information indicates a result of applying the first solution to the real network; and updating the knowledge graph based on the second feedback information. The device configured with the knowledge graph can update the knowledge graph based on feedback of the real network. Therefore, the solution corresponding to the network problem in the knowledge graph is more reliable.

In a possible implementation, the first network problem includes at least one of the following: a network alarm problem, a user complaint problem, and an optimization requirement problem.

In a possible implementation, the first verification instruction includes at least one of the following: the identifier of the service to which the first network problem belongs, an identifier of the first network problem, an identifier of the first solution, an area location identifier, a manipulation instruction, execution time, and collection information setting information; and the first verification result includes at least one of the following: the identifier of the service to which the first network problem belongs, the identifier of the first network problem, the identifier of the first solution, the area location identifier, and network status information.

According to a second aspect, a method for verifying a solution to a network problem is provided. The method may be performed by a device configured with a digital twin network, or may be performed by a component of a device configured with a digital twin network, for example, a processor, a chip, or a chip system of the device configured with the digital twin network, or may be implemented by a logical module or software that can implement all or a part of functions of a device configured with a digital twin network. For example, the method may be performed by a device configured with a digital twin network. The method includes: receiving a first verification instruction from a device configured with a knowledge graph, where the first verification instruction instructs the device configured with the digital twin network to simulate execution of a first solution corresponding to a first network problem, the first solution corresponding to the first network problem is determined by a device configured with a knowledge graph from the knowledge graph based on an identifier of a service to which the first network problem belongs, the knowledge graph includes solutions to a plurality of network problems output by a large language model LLM, the first network problem is one of the plurality of network problems, and the first solution is one of one or more solutions corresponding to the first network problem; and sending a first verification result to the device configured with the knowledge graph, where the first verification result is a result obtained by the device configured with the digital twin network in executing the first solution corresponding to the first network problem.

In the method for verifying the solution to the network problem provided in this embodiment of this application, both the first network problem and the first solution are output by the LLM, and the LLM has a powerful capability of outputting a network problem and a corresponding solution, so that the device configured with the knowledge graph can construct a complete knowledge graph based on the network problem and the corresponding solution that are output by the LLM. Further, the device configured with the digital twin network verifies a solution in the knowledge graph, and feeds back a verification result to the device configured with the knowledge graph, so that the device configured with the knowledge graph can further update the knowledge graph. This can improve reliability of a solution corresponding to a network problem obtained by a user.

In this embodiment of this application, the first verification result indicates that the first network problem is not resolved, and the method further includes: receiving a second verification instruction from the device configured with the knowledge graph, where the second verification instruction instructs the device configured with the digital twin network to simulate execution of a second solution corresponding to the first network problem, the second solution corresponding to the first network problem is determined by the device configured with the knowledge graph from the knowledge graph based on the identifier of the service to which the first network problem belongs, and the second solution is one of the one or more solutions corresponding to the first network problem; and sending a second verification result to the device configured with the knowledge graph, where the second verification result is a result obtained by the device configured with the digital twin network in executing the second solution corresponding to the first network problem. In other words, in this embodiment of this application, when the first verification result indicates that the first network problem is not resolved, the device configured with the digital twin network may verify another solution based on an indication of the device configured with the knowledge graph.

In this embodiment of this application, the LLM is obtained through training based on a plurality of problem pairs, or the LLM is obtained through training based on a plurality of problem pairs and a score of a solution corresponding to each network problem, the score is obtained by inputting the solution corresponding to each problem into the device configured with the digital twin network for simulation, and the plurality of problem pairs include a network problem in a network management dataset and a solution corresponding to the network problem. In other words, in this solution, a device configured with the LLM may train the LLM model based on the plurality of problem pairs in the network management dataset, so that the LLM model can output solutions to the plurality of network problems, and construct the knowledge graph. Alternatively, a device configured with the LLM may obtain the LLM model through training based on the plurality of problem pairs and the score of the solution corresponding to each problem, so that the LLM model can output solutions to the plurality of network problems. The score corresponding to each solution is introduced in an LLM model training process. Therefore, the LLM model obtained through training can be more reliable, and the solutions to the plurality of network problems output by the LLM model are more reliable.

In this embodiment of this application, the first network problem includes at least one of the following: a network alarm problem, a user complaint problem, and an optimization requirement problem.

In this embodiment of this application, the first verification instruction includes at least one of the following: the identifier of the service to which the first network problem belongs, an identifier of the first network problem, an identifier of the first solution, an area location identifier, a manipulation instruction, execution time, and collection information setting information; and the first verification result includes at least one of the following: the identifier of the service to which the first network problem belongs, the identifier of the first network problem, the identifier of the first solution, the area location identifier, and network status information.

According to a third aspect, a model training method is provided. The method may be performed by a device configured with an LLM, or may be performed by a component of a device configured with an LLM, for example, a processor, a chip, or a chip system of the device configured with the LLM, or may be implemented by a logical module or software that can implement all or a part of functions of a device configured with an LLM. For example, the method may be performed by a device configured with an LLM. The method includes: inputting, into a device configured with a digital twin network, a solution corresponding to each network problem in a plurality of problem pairs, where the problem pairs include a network problem in a network management dataset and a solution corresponding to the network problem; receiving, from the device configured with the digital twin network, a score of the solution corresponding to each network problem, where the score is obtained by the device configured with the digital twin network in performing verification on the solution corresponding to each problem and performing evaluation based on a verification result; and performing model training based on the plurality of problem pairs and the score of the solution corresponding to each network problem, to obtain a large language model LLM.

According to the model training method provided in this embodiment of this application, the device configured with the LLM inputs, into the device configured with the digital twin network, the solution corresponding to each network problem in the plurality of problem pairs, so that the device configured with the digital twin network simulates execution of the solution corresponding to each network problem, to obtain the score of the solution corresponding to each network problem. This implements an automatic scoring mechanism, and avoids an error caused by scoring performed by an operation and maintenance expert. Further, the device configured with the LLM trains the LLM model based on the plurality of problem pairs and the solution corresponding to each network problem by using a highest score as a target score. The score of the device configured with the digital twin network is introduced in an LLM model training process. Therefore, the LLM model obtained through training can be more reliable.

In a possible implementation, the LLM includes a network policy model, and the network policy model is obtained through training based on the plurality of problem pairs.

In a possible implementation, the LLM includes a reward model, and the reward model is obtained through training based on the plurality of problem pairs and the score of the solution corresponding to each network problem in the plurality of problem pairs. The score, of the solution corresponding to each network problem, for training the reward model is output by the device configured with the digital twin network. This implements the automatic scoring mechanism, avoids the error caused by scoring performed by the operation and maintenance expert, and makes the reward model to have high reliability.

According to a fourth aspect, a scoring method is provided. The method may be performed by a device configured with a digital twin network, or may be performed by a component of a device configured with a digital twin network, for example, a processor, a chip, or a chip system of the device configured with the digital twin network, or may be implemented by a logical module or software that can implement all or a part of functions of a device configured with a digital twin network. For example, the method may be performed by a device configured with a digital twin network. The method includes: receiving a solution corresponding to each network problem in a plurality of problem pairs from a device configured with an LLM, where the plurality of problem pairs include a network problem in a network management dataset and a solution corresponding to the network problem; and sending a score of the solution corresponding to each network problem to the device configured with the LLM, where the score is obtained by the device configured with the digital twin network in performing verification on the solution corresponding to each problem and performing evaluation based on a verification result.

According to the scoring method provided in this embodiment of this application, the device configured with the LLM inputs, into the device configured with the digital twin network, the solution corresponding to each network problem in the plurality of problem pairs, so that the device configured with the digital twin network simulates execution of the solution corresponding to each network problem, to obtain the score of the solution corresponding to each network problem. This implements an automatic scoring mechanism, and avoids an error caused by scoring performed by an operation and maintenance expert. Further, the device configured with the LLM trains the LLM model based on the plurality of problem pairs and the solution corresponding to each network problem by using a highest score as a target score. The score of the device configured with the digital twin network is introduced in an LLM model training process. Therefore, the LLM model obtained through training can be more reliable.

According to a fifth aspect, a communication apparatus is provided to implement the foregoing methods. The communication apparatus may be the device configured with the knowledge graph according to the first aspect, or an apparatus included in the device configured with the knowledge graph, for example, a chip; or the communication apparatus may be the device configured with the digital twin network according to the second aspect, or an apparatus in the device configured with the digital twin network, for example, a chip; or the communication apparatus may be the device configured with the LLM according to the third aspect, or an apparatus included in the device configured with the LLM, for example, a chip; or the communication apparatus may be the device configured with the digital twin network according to the fourth aspect, or an apparatus in the device configured with the digital twin network, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), respectively configured to implement output (or sending) and input (or receiving) functions according to any one of the foregoing aspects and any possible design of the foregoing aspects. The processing module may be configured to implement a processing function according to any one of the foregoing aspects and any possible design of the foregoing aspects.

Optionally, the communication apparatus further includes a storage module, configured to store program instructions and data.

According to a sixth aspect, a communication apparatus is provided, and includes at least one processor. The processor is configured to run a computer program or instructions, or is configured to cause, through a logic circuit, the communication apparatus to perform the method according to any one of the foregoing aspects. The communication apparatus may be the device configured with the knowledge graph according to the first aspect, or an apparatus included in the device configured with the knowledge graph, for example, a chip; or the communication apparatus may be the device configured with the digital twin network according to the second aspect or the fourth aspect, or an apparatus included in the device configured with the digital twin network, for example, a chip; or the communication apparatus may be the device configured with the LLM according to the third aspect, or an apparatus included in the device configured with the LLM, for example, a chip.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip system. When the communication apparatus is the chip system, the chip system may include a chip, or may include the chip and another discrete component.

According to a seventh aspect, a communication apparatus is provided, and includes a logic circuit and an interface circuit. The interface circuit is configured to input information and/or output information. The logic circuit is configured to perform the method according to any one of the foregoing aspects, and perform processing and/or generate the output information based on the input information. The communication apparatus may be the device configured with the knowledge graph according to the first aspect, or an apparatus included in the device configured with the knowledge graph, for example, a chip; or the communication apparatus may be the device configured with the digital twin network according to the second aspect or the fourth aspect, or an apparatus included in the device configured with the digital twin network, for example, a chip; or the communication apparatus may be the device configured with the LLM according to the third aspect, or an apparatus included in the device configured with the LLM, for example, a chip.

It may be understood that when the communication apparatus provided according to any one of the fifth aspect to the seventh aspect is a chip, the foregoing sending action/function may be understood as outputting information, and the foregoing receiving action/function may be understood as inputting information.

According to an eighth aspect, a computer-readable storage medium is provided. The computer-readable storage medium stores a computer program or instructions. When the computer program or the instructions are executed by a processor, the method according to any one of the foregoing aspects is performed.

According to a ninth aspect, a computer program product is provided. When the computer program product is executed by a processor, the method according to any one of the foregoing aspects is performed.

According to a tenth aspect, a communication apparatus is provided. The communication apparatus includes a module/unit configured to perform the method according to any one of the first aspect to the fourth aspect.

For technical effect brought by any one of the designs of the fifth aspect to the tenth aspect, refer to the technical effect brought by different designs of the first aspect, the second aspect, the third aspect, or the fourth aspect. Details are not described herein.

According to an eleventh aspect, a communication system is provided, and includes a device configured with a knowledge graph and a device configured with a digital twin network. The device configured with the knowledge graph is configured to: receive, from a management and control center, an identifier of a service to which a first network problem belongs, and determine, from the knowledge graph based on the identifier of the service to which the first network problem belongs, a first solution corresponding to the first network problem, where the knowledge graph includes solutions to a plurality of network problems output by a large language model LLM, the first network problem is one of the plurality of network problems, and the first solution is one of one or more solutions corresponding to the first network problem. The device configured with the knowledge graph is further configured to send a first verification instruction to the device configured with the digital twin network, where the first verification instruction instructs the device configured with the digital twin network to simulate execution of the first solution corresponding to the first network problem. The device configured with the digital twin network is configured to receive the first verification instruction from the device configured with the knowledge graph, simulate execution of the first solution according to the first verification instruction, and then send a first verification result to the device configured with the knowledge graph, where the first verification result is a result obtained by the device configured with the digital twin network in executing the first solution corresponding to the first network problem. The device configured with the knowledge graph is further configured to receive the first verification result from the device configured with the digital twin network.

In the communication system provided in this embodiment of this application, the first verification result indicates that the first network problem is resolved. The device configured with the knowledge graph is further configured to send first feedback information to the management and control center, where the first feedback information indicates that a verification service corresponding to the first network problem is completed.

In the communication system provided in this embodiment of this application, the first verification result indicates that the first network problem is not resolved. The device configured with the knowledge graph is further configured to determine, from the knowledge graph based on the identifier of the first network problem, a second solution corresponding to the first network problem, where the second solution is one of the one or more solutions corresponding to the first network problem. The device configured with the knowledge graph is further configured to send a second verification instruction to the device configured with the digital twin network, where the second verification instruction instructs the device configured with the digital twin network to simulate execution of the second solution corresponding to the first network problem. The device configured with the digital twin network is further configured to receive the second verification instruction from the device configured with the knowledge graph, simulate execution of the second solution according to the second verification instruction, and then send a second verification result to the device configured with the knowledge graph. The device configured with the knowledge graph is further configured to receive the second verification result from the device configured with the digital twin network.

In the communication system provided in this embodiment of this application, the device configured with the knowledge graph is further configured to update the knowledge graph based on the first verification result.

In the communication system provided in this embodiment of this application, that the device configured with the knowledge graph is further configured to update the knowledge graph based on the first verification result includes: the device configured with the knowledge graph is further configured to increase or decrease, based on the first verification result, a weight corresponding to the first solution in the knowledge graph, or update a topology structure of the knowledge graph based on the first verification result.

In the communication system provided in this embodiment of this application, an LLM is obtained through training based on a plurality of problem pairs, or an LLM is obtained through training based on a plurality of problem pairs and a score of a solution corresponding to each problem, the score is obtained by inputting the solution corresponding to each problem into the device configured with the digital twin network for simulation, and the plurality of problem pairs include a network problem in a network management dataset and a solution corresponding to the network problem.

In the communication system provided in this embodiment of this application, the first verification result indicates that the first network problem is resolved. The device configured with the knowledge graph is further configured to send first indication information to the management and control center, where the first indication information indicates the management and control center to apply the first solution to a real network. The device configured with the knowledge graph is further configured to receive second feedback information from the management and control center, and update the knowledge graph based on the second feedback information, where the second feedback information indicates a result of applying the first solution to the real network.

In the communication system provided in this embodiment of this application, the first network problem includes at least one of the following: a network alarm problem, a user complaint problem, and an optimization requirement problem.

In the communication system provided in this embodiment of this application, the first verification instruction includes at least one of the following: the identifier of the service to which the first network problem belongs, an identifier of the first network problem, an identifier of the first solution, an area location identifier, a manipulation instruction, execution time, and collection information setting information; and the first verification result includes at least one of the following: the identifier of the service to which the first network problem belongs, the identifier of the first network problem, the identifier of the first solution, the area location identifier, and network status information.

For technical effect brought by any one of the designs of the eleventh aspect, refer to the technical effect brought by different designs of the first aspect or the second aspect. Details are not described herein.

According to a twelfth aspect, a communication system is provided. The communication system includes a device configured with an LLM and performing the method according to the third aspect and a device configured with a digital twin network and performing the method according to the fourth aspect.

For technical effect brought by any one of the designs of the twelfth aspect, refer to the technical effect brought by different designs of the third aspect or the fourth aspect. Details are not described herein.

### BRIEF DESCRIPTION OF DRAWINGS

FIG. 1 is a diagram of injecting knowledge of a knowledge graph into an LLM according to an embodiment of this application;
FIG. 2 is a diagram of a communication system according to an embodiment of this application;
FIG. 3 is a diagram of device interaction in a communication system according to an embodiment of this application;
FIG. 4 is a diagram of a communication device according to an embodiment of this application;
FIG. 5 is a diagram of a model training solution according to an embodiment of this application;
FIG. 6 is a diagram of a specific model training procedure according to an embodiment of this application;
FIG. 7 is a diagram of a method for verifying a solution to a network problem according to an embodiment of this application;
FIG. 8 is a diagram of a topology structure of a network problem determining decision tree according to an embodiment of this application;
FIG. 9 is a diagram of a topology structure of a network problem solution decision tree according to an embodiment of this application; and
FIG. 10 is a diagram of a communication apparatus according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, and (or) c may indicate a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, mutual reference may be made between same or similar parts of embodiments. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application. For ease of understanding of the technical solutions in embodiments of this application, the following first briefly describes technologies and terms related to this application.

### 1. LLM

An LLM is an artificial intelligence model that can continuously collect and build high-quality datasets (including manual labeling) to continuously optimize, quickly iterate, and return data. When training data included in the LLM exceeds a specific scale, unexpected capabilities can be generated, such as a language understanding capability, an intent understanding capability, and a multi-round dialog memory capability. The LLM stores knowledge through network parameters. An inference process of the LLM is a "black box", that is, the process is unexplainable.

Table 1 shows comparison between advantages and disadvantages of the LLM represented by an artificial intelligence (artificial intelligence, AI) chatbot. As shown in Table 1, although the AI chatbot has many advantages in question answering, the AI chatbot has disadvantages in logical inference.

**Table 1**

| AI chatbot | Advantage | Disadvantage |
|---|---|---|
| Language organization ability | An answer is coherent and natural in language, logically sound, and reaches a human-level standard. | The answer is not based on a fact but on the language model; and does not explicitly use knowledge, but rather relies on coherence of language. |
| Contextual semantic understanding of a multi-round dialog | Extension is made based on previous text and a previous error is identified and corrected. | Rounds are limited, a memory capability decreases significantly subsequently, and previous and subsequent answers may be contradictory. |
| Multi-type task | A general-purpose large model structure is used to support to complete the multi-type task. | In terms of some subtasks, it is not as accurate and flexible as some subtask models. |
| Unstructured data structuring | Information is extracted from unstructured (text) data and is converted into structured data. | Accuracy is low, and a logical relationship of data needs to be clearly described. |

In the mobile communication field, there are many network problems related to operation and maintenance and optimization. The LLM can output solutions to the network problems. However, problems faced when the LLM is applied to the mobile communication field are shown in Table 2.

**Table 2**

| AI chatbot | Constraint |
|---|---|
| The language model is not a knowledge model, and an answer to a fact question is unreliable. | The language model can determine which sentence is most likely, focus on language information and can output, after being trained, an answer whose semantics is understood and that complies with a syntax structure. If the LLM is incorrectly used as a knowledge model, an answer of the AI chatbot is unreliable. |
| Performance is poor in answering to a question requiring knowledge-based inference. | A logical inference capability and a domain knowledge-based precise calculation capability are poor. |
| The model is large and general-purpose, with a poor capability of resolving a professional problem. | Optimal performance cannot be achieved in some subdivided fields. |

It can be learned from Table 2 that the current LLM is essentially still learning a distribution rule of data, and lacks a causal analysis capability and a logical inference capability.

### 2. Knowledge graph

A knowledge graph stores knowledge in triples, and represents, in a topology structure of nodes and edges, a structured knowledge base of entities and relationships, which is easy to understand. The knowledge graph represents a logic of knowledge display and decouples it from a specific knowledge application mode, so that an inference process is clear, explicit, and explainable, and has a causal analysis capability and logical inference capability.

### 3. Training an LLM based on knowledge of a knowledge graph

In embodiments of this application, an LLM may be trained based on knowledge in a knowledge graph. For example, pre-training corpus may be cleaned, filtered, and sorted based on the knowledge in the knowledge graph, to improve quality of the corpus. Alternatively, for example, a structure of an LLM model may be modified, so that the LLM model can process a text sequence or improve a pre-training task, thereby improving pre-training effectiveness.

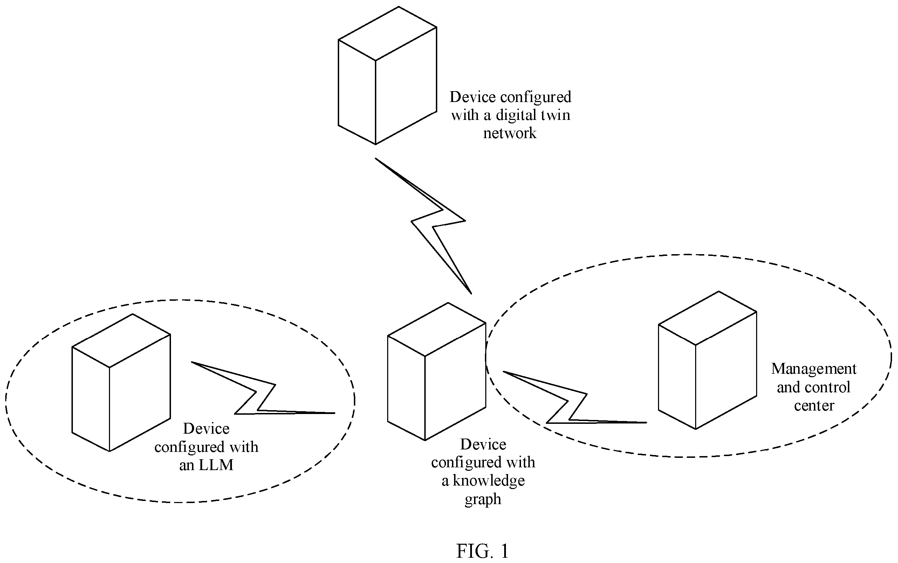

FIG. 1 is a diagram of a communication system according to an embodiment of this application. As shown in FIG. 1, the communication system includes a device configured with a knowledge graph and a device configured with a digital twin network.

The device configured with the knowledge graph is configured to: send, to the device configured with the digital twin network, a verification instruction of a solution corresponding to a network problem, and receive a verification result, where the knowledge graph includes solutions to a plurality of network problems output by an LLM model.

The device configured with the digital twin network is configured to: receive the verification instruction from the device configured with the knowledge graph, simulate execution of the solution according to the verification instruction, and send the verification result to the device configured with the knowledge graph.

Optionally, as shown in FIG. 1, the communication system provided in this embodiment of this application further includes a management and control center, configured to send, to the device configured with the knowledge graph, an identifier of a service to which the network problem belongs, and further configured to receive feedback information of the device configured with the knowledge graph.

Optionally, as shown in FIG. 1, the communication system provided in this embodiment of this application further includes a device configured with the LLM, configured to output the solutions to the plurality of network problems, and further configured to train the LLM model.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Optionally, functions related to the device configured with the knowledge graph, the device configured with the digital twin network, the device configured with the LLM, or the management and control center in this application may be implemented by one device, or may be jointly implemented by a plurality of devices, or may be implemented by one or more functional modules in one device, or may be one or more chips, or may be a system on chip (system on chip, SoC) or a chip system. The chip system may include a chip, or may include a chip and another discrete component. This is not specifically limited in embodiments of this application.

It may be understood that the foregoing function may be a network element in a hardware device, may be a software function running on dedicated hardware, a combination of hardware and software, or a virtualization function instantiated on a platform (for example, a cloud platform).

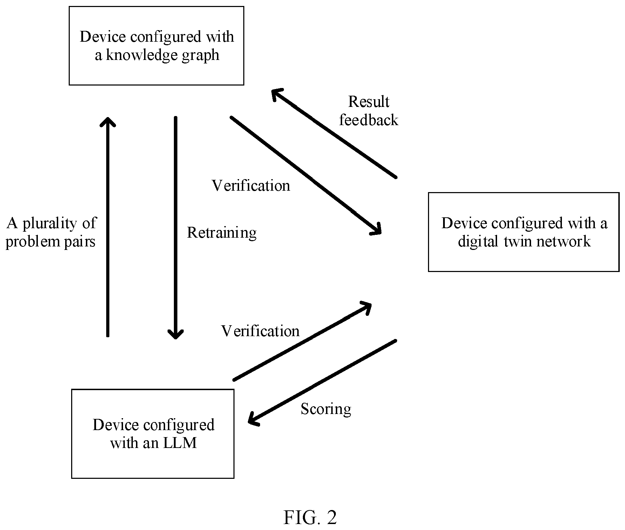

With reference to the communication system shown in FIG. 1, for example, FIG. 2 is a diagram of device interaction in a communication system according to an embodiment of this application. As shown in FIG. 2, to improve reliability of a solution corresponding to a network problem obtained by a user, a knowledge graph of a device configured with the knowledge graph comes from a plurality of problem pairs output by a device configured with an LLM, and the device configured with the LLM may train the LLM model based on the plurality of problem pairs corresponding to the knowledge graph in the device configured with the knowledge graph. In addition, a device configured with a digital twin network obtains, from the device configured with the LLM, a solution corresponding to each network problem corresponding to the plurality of problem pairs, simulates and verifies the solution corresponding to each network problem, obtains a score of the solution corresponding to each network problem, and then feeds back the problem, the corresponding solution, and the score to the device configured with the LLM. The device configured with the LLM trains a reward model of the LLM model based on the problem, the corresponding solution, and the score. Further, the device configured with the knowledge graph sends a verification instruction to the device configured with the digital twin network, and the device configured with the digital twin network simulates the solution corresponding to the network problem in the problem pair according to the verification instruction, and feeds back a verification result to the device configured with the knowledge graph, so as to further update the knowledge graph in the device configured with the knowledge graph.

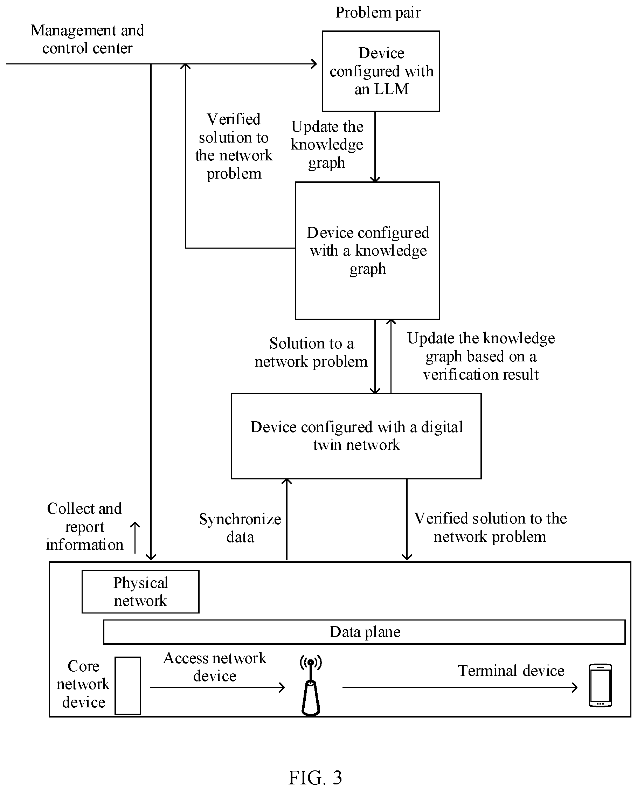

With reference to the communication system shown in FIG. 1, for example, FIG. 3 is a diagram of interaction between internal devices in a communication system according to an embodiment of this application and a diagram of interaction between the communication system and a physical network.

As shown in FIG. 3, a device configured with a knowledge graph may update the knowledge graph based on a problem pair output by an LLM model of a device configured with the LLM. The device configured with the knowledge graph may send, to a device configured with a digital twin network, a verification instruction for verifying a solution to a network problem in the knowledge graph, and receive a verification result of the device configured with the digital twin network. The device configured with the knowledge graph may update the knowledge graph based on the verification result. The device configured with the digital twin network may simulate and verify the solution to the network problem according to the verification instruction, to obtain the verification result.

In a possible implementation, the device configured with the digital twin network may deliver an instruction to the physical network based on the verification result, to instruct to apply the solution to the physical network. When the device configured with the digital twin network needs to verify the solution to the network problem, data of the physical network is synchronized.

In another possible implementation, the device configured with the knowledge graph sends, to a management and control center, indication information indicating to apply a solution to a verified network problem to the physical network. The management and control center may send, to the physical network based on the indication information, the indication information indicating to apply the solution to the verified network problem to the physical network, so that the solution to the verified network problem is implemented in the physical network. After the solution to the verified network problem is implemented in the physical network, the physical network may collect and report information to the management and control center.

For example, as shown in FIG. 3, the physical network in this embodiment of this application may include a core network device, an access network device, and a terminal device. A data plane of the physical network is used to collect the information, and then report the information to the management and control center.

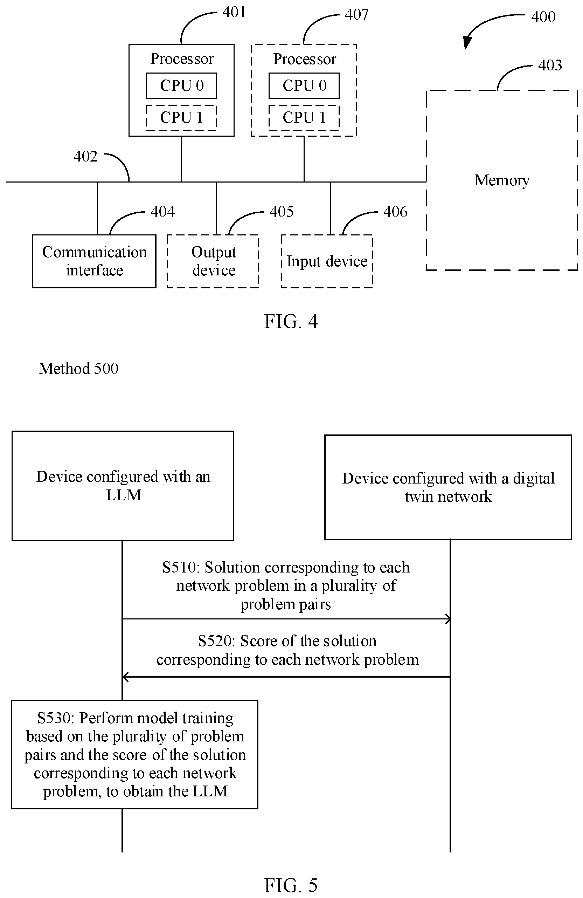

Functions related to the device configured with the knowledge graph, the device configured with the digital twin network, the device configured with the LLM, and the management and control center in this application may be implemented via a communication device 400 in FIG. 4. FIG. 4 is a diagram of a structure of the communication device 400 according to an embodiment of this application. The communication device 400 includes one or more processors 401, a communication line 402, and at least one communication interface (where in FIG. 2, only an example in which a communication interface 404 and one processor 401 are included is used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for connecting different components.

The communication interface 404 may be a transceiver module, configured to communicate with another device or a communication network, for example, the Ethernet, a radio access network (radio access network, RAN), a terminal, or a wireless local area network (wireless local area network, WLAN). For example, the transceiver module may be an apparatus like a transceiver or a transceiver machine. Optionally, the communication interface 404 may further be a transceiver circuit or an input/output interface in the processor 401, to implement signal input and signal output of the processor.

The memory 403 may be an apparatus having a storage function. For example, the memory 403 may be a read-only memory (read-only memory, ROM) or another type of static storage device that can store static information and instructions, a random access memory (random access memory, RAM) or another type of dynamic storage device that can store information and instructions, or may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement a method for verifying a solution to a network problem or a model training method provided in embodiments of this application.

Alternatively, optionally, in embodiments of this application, the processor 401 may perform processing-related functions in a method for verifying a solution to a network problem or a model training method provided in the following embodiments of this application, and the communication interface 404 is responsible for communicating with another device or a communication network. This is not specifically limited in embodiments of this application. Optionally, the computer-executable instructions in embodiments of this application may also be referred to as application code. This is not specifically limited in embodiments of this application.

During specific implementation, in an embodiment, the processor 401 may include one or more CPUs, such as a CPU 0 and a CPU 1 in FIG. 2.

During specific implementation, in an embodiment, the communication device 400 may include a plurality of processors, for example, the processor 401 and a processor 407 in FIG. 2. Each of the processors may be a single-core (single-core) processor or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller (microcontroller unit, MCU), or an artificial intelligence processor. Each type of computing device may include one or more cores for executing software instructions to perform an operation or processing.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light-emitting diode (light-emitting diode, LED) display device, a cathode ray tube (cathode ray tube, CRT) display device, a projector (projector), or the like. The input device 406 communicates with the processor 401, and may receive an input of a user in a plurality of manners. For example, the input device 406 may be a mouse, a keyboard, a touchscreen device, a sensing device, or the like.

The communication device 400 may also be referred to as a communication apparatus sometimes, and may be a general-purpose device or a dedicated device. For example, the communication device 400 may be a desktop computer, a portable computer, a network server, a palmtop computer (personal digital assistant, PDA), a mobile phone, a tablet computer, a wireless terminal device, an embedded device, or a device having a structure similar to that in FIG. 1. A type of the communication device 400 is not limited in embodiments of this application.

In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

The following describes, with reference to the communication system shown in FIG. 2, the model training method and the method for verifying the solution to the network problem provided in embodiments of this application.

FIG. 5 is a diagram of an example of a model training method according to an embodiment of this application. The method is described by using interaction between a device configured with a digital twin network and a device configured with an LLM as an example. Certainly, a subject that performs an action of the device configured with the digital twin network in the method may further be an apparatus/a module in the device configured with the digital twin network, for example, a chip, a processor, or a processing unit in the device configured with the digital twin network. A subject that performs an action of the device configured with the LLM in the method may further be an apparatus/a module in the device configured with the LLM, for example, a chip, a processor, or a processing unit in the device configured with the LLM. This is not specifically limited in embodiments of this application. In this embodiment of this application, processing performed by a single execution entity (for example, the device configured with the digital twin network or the device configured with the LLM) may also be divided into processing performed by a plurality of execution entities. These execution entities may be logically and/or physically separated. For example, as shown in FIG. 5, the model training method 500 provided in this embodiment of this application includes the following steps.

S510: The device configured with the LLM outputs, to the device configured with the digital twin network, a solution corresponding to each problem in a plurality of problem pairs. Correspondingly, the device configured with the digital twin network receives, from the device configured with the LLM, the solution corresponding to each problem in the plurality of problem pairs.

In this embodiment of this application, the plurality of problem pairs include a network problem in a network management dataset and a solution corresponding to the network problem.

For example, the solution corresponding to the network problem may be provided by an operation and maintenance expert.

For example, the network problem in the network management dataset may be a network problem in a real network, or may be a network problem proposed by an operation and maintenance expert. This is not limited in embodiments of this application.

For example, the network problem may be a triplet verification problem. For example, a triplet is a radio access network A, a base station B, and a cell C. The device configured with the LLM provides solutions of several inclusion relationships between A, B, and C. The device configured with the digital twin network simulates the several inclusion relationships. For example, the device configured with the digital twin network simulates the relationships and outputs the following result: If the radio access network A includes the base station B and the base station B includes the cell C, the two inclusion relationships are both correct and a score is 100; or if the radio access network A includes the base station B and the base station B does not include the cell C, only one of the two inclusion relationships is correct and a score is 50; or if the radio access network A does not include the base station B and the base station B does not include the cell C, the two inclusion relationships are both incorrect and a score is 0.

For example, the network problem in this embodiment of this application may be a causal relationship problem. For example, the network problem is that an average signal to interference plus noise ratio (signal interference noise ratio, SINR) of a user is less than or equal to 0 dB, and a corresponding solution is to change a quantity of intra-frequency cells. To determine whether the quantity of intra-frequency cells is a cause of the average SINR of the user being less than or equal to 0 dB, for example, when the quantity of intra-frequency cells is 3 or 6, the device configured with the digital twin network separately simulates a case in which the quantity of intra-frequency cells is 3 or 6. If the average SINR of the user changes when the quantity of intra-frequency cells is 3 or 6, it may be considered that the quantity of intra-frequency cells is the cause of the average SINR of the user being less than or equal to 0 dB, and a score is 100; or if the average SINR of the user does not change when the quantity of intra-frequency cells is 3 or 6, it may be considered that the quantity of intra-frequency cells is not the cause of the average SINR of the user being less than or equal to 0 dB, and a score is 0.

For example, the network problem in this embodiment of this application may be a network alarm problem. For example, power of a primary cell is low, and a corresponding solution D is to perform power control based on a deep Q network (deep Q network, DQN) and a corresponding solution E is to perform power control based on a data channel. The device configured with the digital twin network simulates power control based on the DQN, and if a simulation result is that the power of the primary cell increases, a score is 100. The device configured with the digital twin network simulates power control based on the data channel, and if a simulation result is that the power of the primary cell is still low, a score is 0.

In this embodiment of this application, the network problem may be another problem. The foregoing is merely several examples, and this is not limited in embodiments of this application.

S520: The device configured with the digital twin network sends, to the device configured with the LLM, a score of the solution corresponding to each network problem. Correspondingly, the device configured with the LLM receives, from the device configured with the digital twin network, the score of the solution corresponding to each network problem.

In this embodiment of this application, after receiving, from the device configured with the LLM, the solution corresponding to each problem in the plurality of problem pairs, the device configured with the digital twin network may verify the solution corresponding to each problem, and obtain, through evaluation based on a verification result, the score of the solution corresponding to each problem.

S530: The device configured with the LLM performs model training based on the plurality of problem pairs and the score of the solution corresponding to each network problem, to obtain the LLM.

In a possible implementation, the device configured with the LLM performs model training based on the plurality of problem pairs by using a highest score as a target, to obtain the LLM. In this embodiment of this application, the LLM obtained through training by using the highest score as the target is more reliable.

Optionally, the LLM includes a network policy model, and the network policy model is obtained through training based on the plurality of problem pairs.

Optionally, the LLM further includes a reward model, and the reward model is obtained through training based on the plurality of problem pairs and the score of the solution corresponding to each network problem in the plurality of problem pairs.

In this embodiment of this application, training data of the reward model includes the score of the solution corresponding to each network problem. Therefore, the reward model can output the score of the solution corresponding to each network problem, that is, evaluate reliability of the solution corresponding to each network problem, so that the LLM model obtained through training based on the reward model is more reliable.

It should be understood that in this embodiment of this application, a parameter of the network policy model is adjusted, so that a score of a result output by the network policy model is highest in the reward model. After repeated training, the network policy model based on the reward model, namely, the LLM, can be obtained.

In a possible implementation, when a new network problem exists in the real network, the operation and maintenance expert obtains a solution to the new network problem, and may use the new network problem and/or the solution to the new network problem as training data to retrain the network policy model, the reward model, and/or the LLM.

According to the model training method provided in this embodiment of this application, the device configured with the LLM inputs, into the device configured with the digital twin network, the solution corresponding to each network problem in the plurality of problem pairs, so that the device configured with the digital twin network simulates execution of the solution corresponding to each network problem, to obtain the score of the solution corresponding to each network problem. This implements an automatic scoring mechanism, and avoids an error caused by scoring performed by the operation and maintenance expert. Further, the device configured with the LLM trains the LLM model based on the plurality of problem pairs by using the highest score as the target. The score of the device configured with the digital twin network is introduced in an LLM model training process. Therefore, the LLM model obtained through training can be more reliable.

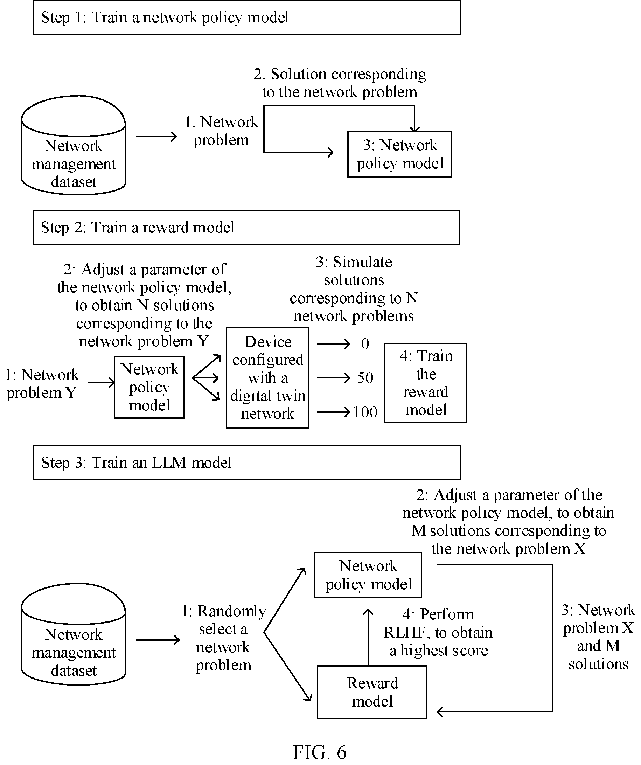

For example, FIG. 6 is a schematic flowchart of training an LLM model according to an embodiment of this application. As shown in FIG. 6, in step 1, a device configured with the LLM trains a network policy model based on a plurality of problem pairs. In step 2, the device configured with the LLM inputs, into a device configured with a digital twin network, a score obtained by simulating a solution corresponding to each problem, and trains a reward model by using the plurality of problem pairs and the score of the solution corresponding to each network problem in the plurality of problem pairs as data. In step 3, the device configured with the LLM adjusts a parameter in a manner such as reinforcement learning (reinforcement learning from human feedback, RLHF) based on the plurality of problem pairs and the solution corresponding to each problem, to maximize a score of an output solution, thereby training the LLM. For example, a procedure includes the following steps.

Step 1: Train the network policy model, which may include the following step: Input a network problem and a solution corresponding to the network problem into the network policy model for training. The network problem may be a random network problem in a network management dataset, and the network problem may be a network alarm problem. In a possible implementation, the solution corresponding to the network problem may be provided by an operation and maintenance expert. In another possible implementation, the solution corresponding to the network problem is determined based on historical running data, a log, or the like. For example, the solution may be a cause of the alarm problem.

Step 2: Train the reward model, which may include the following steps: 1. Randomly select a network problem Y from the plurality of problem pairs. 2. The device configured with the LLM adjusts the parameter of the network policy model, to obtain N solutions corresponding to the network problem Y. 3. The device configured with the LLM inputs the N solutions into the device configured with the digital twin network, and the device configured with the digital twin network simulates the N solutions, to obtain scores of the N solutions. 4. The device configured with the LLM trains the reward model based on the network problem Y, the N solutions, and the scores of the N solutions. The reward model can be obtained through training by repeating the foregoing steps.

Step 3: Train the LLM model, which may include the following steps: 1. The device configured with the LLM randomly selects a network problem X. 2. The device configured with the LLM adjusts a parameter of the network policy model, to obtain M solutions corresponding to the network problem X. 3. The device configured with the LLM inputs, into the reward model, the network problem X and the M solutions corresponding to the network problem X, so that the reward model outputs scores of the M reward solutions. 4. Perform reinforcement learning from human feedback (reinforcement learning from human feedback, RLHF), so that a solution output by the network policy model obtains a highest score. Repeated training is continuously performed, to obtain the LLM.

In this embodiment of this application, the device configured with the LLM may perform training based on the plurality of problem pairs by using the highest score as a target, to finally obtain the LLM. In other words, the device configured with the LLM adjusts the parameter of the network policy model, so that a score of an output result in the reward model is high. Through reinforcement learning, the output result of the network policy model obtains a highest reward, and repeated training is continuously performed, to finally obtain the LLM through training. The foregoing manner can improve reliability of the LLM.

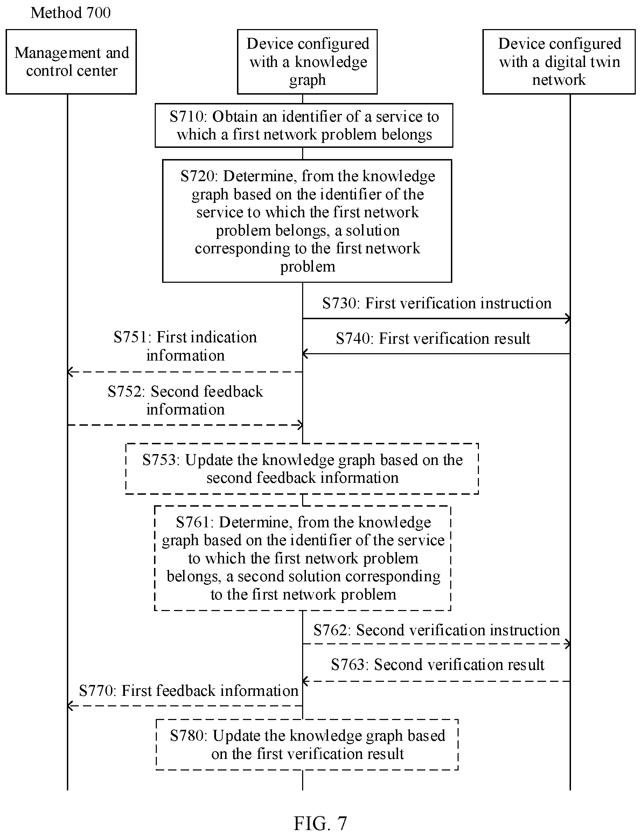

FIG. 7 is a diagram of an example of a method for verifying a solution to a network problem according to an embodiment of this application. The method is described by using interaction between a device configured with a digital twin network and a device configured with a knowledge graph as an example. Certainly, a subject that performs an action of the device configured with the digital twin network in the method may further be an apparatus/a module in the device configured with the digital twin network, for example, a chip, a processor, or a processing unit in the device configured with the digital twin network. A subject that performs an action of the device configured with the knowledge graph in the method may further be an apparatus/a module in the device configured with the knowledge graph, for example, a chip, a processor, or a processing unit in the device configured with the knowledge graph. This is not specifically limited in embodiments of this application. In this embodiment of this application, processing performed by a single execution entity (for example, the device configured with the digital twin network or the device configured with the knowledge graph) may also be divided into processing performed by a plurality of execution entities. These execution entities may be logically and/or physically separated. For example, as shown in FIG. 7, the method 700 includes the following steps.

S710: The device configured with the knowledge graph obtains an identifier of a service to which a first network problem belongs.

For example, the service to which the first network problem belongs may be a verification service of the network problem.

In a possible implementation, the device configured with the knowledge graph receives, from a management and control center, the identifier of the service to which the first network problem belongs.

Optionally, the knowledge graph is pre-stored by the device configured with the knowledge graph. This is not limited in embodiments of this application.

Optionally, the management and control center receives the first network problem from a real network, and sends, to the device configured with the knowledge graph, the identifier of the service to which the first network problem belongs. For example, the first network problem may be information such as alarm information, a user complaint, or an optimization requirement. It should be understood that another network problem may also belong to the first network problem. This is not limited in embodiments of this application.

S720: The device configured with the knowledge graph determines, from the knowledge graph based on the identifier of the service to which the first network problem belongs, a solution corresponding to the first network problem.

In this embodiment of this application, the knowledge graph includes solutions to a plurality of network problems output by an LLM, the first network problem is one of the plurality of network problems, and the first solution is one of one or more solutions corresponding to the first network problem. It should be understood that the knowledge graph further includes another network problem and one or more solutions corresponding to the another network problem. This is not limited in embodiments of this application.

In a possible implementation of this embodiment of this application, the LLM is obtained through training based on a plurality of problem pairs, where the plurality of problem pairs include a network problem in a network management dataset and a solution corresponding to the network problem. This is not limited in embodiments of this application. In another possible implementation of this embodiment of this application, the LLM is obtained through training based on a plurality of problem pairs and a score of a solution corresponding to each network problem. For example, the score is obtained by inputting, into the device configured with the digital twin network, the solution corresponding to each problem in the model training method described in the method 400 for simulation. Alternatively, for example, the score is obtained by an operation and maintenance expert in scoring the solution corresponding to each problem. A source of the score is not limited in embodiments of this application. In this embodiment of this application, the plurality of problem pairs include the network problem in the network management dataset and the solution corresponding to the network problem. This is not limited in embodiments of this application.

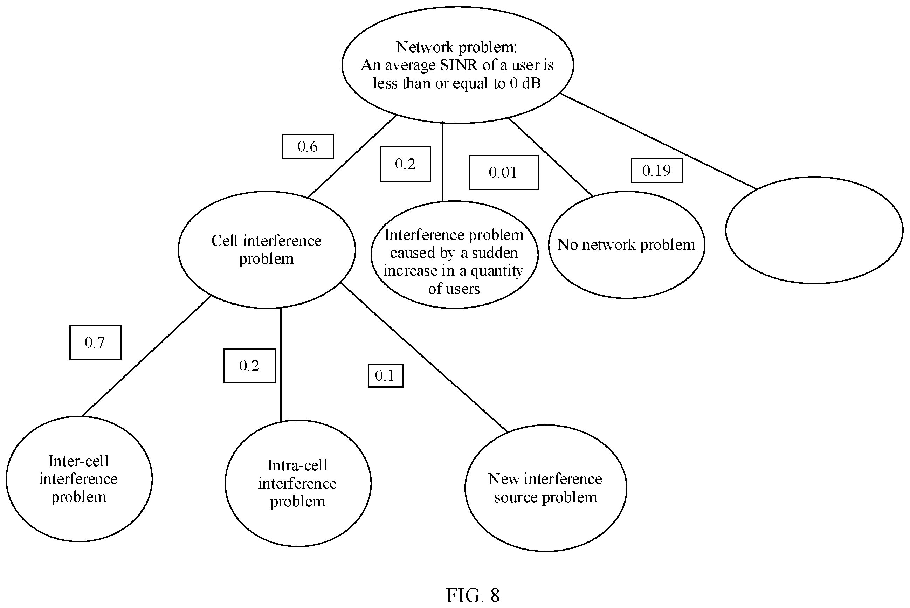

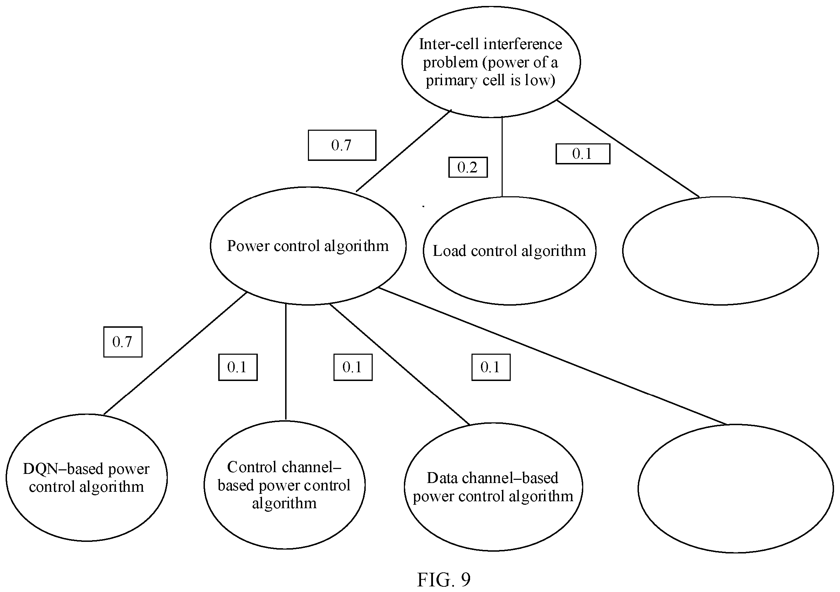

For ease of understanding by a reader, the knowledge graph is described by using examples with reference to FIG. 8 and FIG. 9. FIG. 8 is a diagram of a topology structure of a network problem determining decision tree in the knowledge graph. As shown in FIG. 8, for example, a first layer node of the network problem determining decision tree may indicate that a network problem is that an average SINR of a user is less than or equal to 0 dB. A second layer node of the network problem determining decision tree may indicate causes of the average SINR of the user being less than or equal to 0 dB. For example, one cause is a cell interference problem. Optionally, a weight of the cell interference problem in the network problem determining decision tree may be 0.6 (the weight may indicate a proportion of the cell interference problem in all the causes of the network problem, and is not described again in the following examples). For another example, one cause is an interference problem caused by a sudden increase in a quantity of users. Optionally, a weight of the interference problem caused by the sudden increase in the quantity of users in the network problem determining decision tree may be 0.2. For another example, one cause is no network problem. Optionally, a weight of the no network problem in the network problem determining decision tree may be 0.01. A third layer node of the network problem determining decision tree may indicate more refined causes of the causes in the second layer node. For example, for the cell interference problem in the second layer node, a cause of the cell interference problem is an inter-cell interference problem. Optionally, a weight of the inter-cell interference problem in the cell interference problem is 0.7. For another example, a cause of the cell interference problem is an intra-cell interference problem. Optionally, a weight of the intra-cell interference problem in the interference problem is 0.2. For another example, a cause of the cell interference problem is a new interference source problem. Optionally, a weight of the new interference source problem in the cell interference problem is 0.1.

It should be understood that the first network problem in this embodiment of this application may be the network problem corresponding to any layer node of the network problem determining decision tree, or, in other words, for example, a cause of the network problem in the first layer node, in the second layer node may also be used as a network problem. This is not limited in embodiments of this application.

FIG. 9 is a diagram of a topology structure of a network problem solution decision tree in the knowledge graph. As shown in FIG. 9, for example, a network problem may be an inter-cell interference problem. A first layer node of the network problem solution decision tree may indicate that a cause of the inter-cell interference problem is that power of a primary cell is low. A second layer node of the network problem solution decision tree may indicate that one solution for resolving the problem that the power of the primary cell is low is to use a power control algorithm. Optionally, a weight of using the power control algorithm in the network problem solution decision tree is 0.7. The second layer node of the network problem solution decision tree may indicate that one solution for resolving the problem that the power of the primary cell is low is to use a load control algorithm. Optionally, a weight of using the load control algorithm in the network problem solution decision tree is 0.2. A third layer node of the network problem solution decision tree may indicate more refined solutions of solutions in the second layer node. For example, one more refined solution of the solution that uses the power control algorithm in the second layer node is a DQN-based power control algorithm. Optionally, a weight of the DQN-based power control algorithm in the power control algorithm is 0.7. For another example, one more refined solution of the solution that uses the power control algorithm in the second layer node is a control channel-based power control algorithm. Optionally, a weight of the control channel-based power control algorithm in the power control algorithm is 0.1. For another example, one more refined solution of the solution that uses the power control algorithm in the second layer node is a data channel-based power control algorithm. Optionally, a weight of the data channel-based power control algorithm in the power control algorithm is 0.1.

For example, the first solution corresponding to the first network problem in this embodiment of this application may be the DQN-based power control algorithm shown in FIG. 9. Alternatively, for example, the first solution corresponding to the first network problem may be the control channel-based power control algorithm shown in FIG. 9. Alternatively, for example, the first solution corresponding to the first network problem may be the data channel-based power control algorithm shown in FIG. 9. This is not limited in embodiments of this application.

It should be noted that blank nodes in the network problem determining decision tree in the knowledge graph shown in FIG. 8 and blank nodes in the network problem solution decision tree in the knowledge graph shown in FIG. 9 may be supplemented by solutions output by the LLM, that is, branches in the topology structures are added with the solutions output by the LLM. For example, if a network problem Z that is not in the knowledge graph occurs in the real network, a network management center may input the network problem Z into the LLM of a device configured with the LLM, and the LLM outputs a solution to the network problem Z. Further, the device configured with the LLM may input, into the device configured with the knowledge graph, the network problem Z and the solution corresponding to the network problem Z, and the device configured with the knowledge graph may correspondingly supplement a blank area in the knowledge graph. Optionally, the device configured with the knowledge graph may adjust a weight corresponding to each node based on the network problem Z and the solution corresponding to the network problem Z that are output by the device configured with the LLM.

S730: The device configured with the knowledge graph sends a first verification instruction to the device configured with the digital twin network. Correspondingly, the device configured with the digital twin network receives the first verification instruction from the device configured with the knowledge graph.

In this embodiment of this application, the first verification instruction instructs the device configured with the digital twin network to simulate execution of the first solution corresponding to the first network problem.

In a possible implementation, the first solution corresponding to the first network problem may be a solution (for example, a solution with a highest weight in the knowledge graph) most likely to resolve the first network problem. Therefore, the device configured with the digital twin network can simulate fewer solutions. This saves resource overheads for simulating solutions. The first solution corresponding to the first network problem may alternatively be any one of the one or more solutions corresponding to the first network problem. This is not limited in embodiments of this application.

S740: The device configured with the digital twin network sends a first verification result to the device configured with the knowledge graph. Correspondingly, the device configured with the knowledge graph receives the first verification result from the device configured with the digital twin network.

In this embodiment of this application, the first verification result is a result obtained by the device configured with the digital twin network by executing the first solution corresponding to the first network problem.

Optionally, the first verification result indicates that the first network problem is resolved. For example, the first network problem is that the average SINR of the user is less than or equal to 0 dB due to the intra-cell interference problem. After the device configured with the digital twin network performs simulation by using the DQN-based power control algorithm, if the average SINR of the user is greater than 0 dB, it may be considered that the first network problem is resolved; or if the average SINR of the user is greater than a first threshold, it may be considered that the first network problem is resolved. This is not limited in embodiments of this application.

Optionally, the first verification result indicates that the first network problem is not resolved. For example, the first network problem is that the average SINR of the user is less than or equal to 0 dB due to the intra-cell interference problem. After the device configured with the digital twin network performs simulation by using the DQN-based power control algorithm, if the average SINR of the user is still less than or equal to 0 dB, it may be considered that the first network problem is not resolved.

For example, the first verification result may be a specific value. For example, if a value of the average SINR of the user is 5, the device configured with the knowledge graph determines, based on the value, that the first network problem is resolved. For another example, if a value of the average SINR of the user is -5, the device configured with the knowledge graph determines, based on the value, that the first network problem is not resolved. Alternatively, for example, the first verification result may be indication information. If the indication information is an acknowledgment (acknowledgment, ACK), it indicates that the first network problem is resolved. If the indication information is a negative acknowledgment (negative acknowledgment, NACK), it indicates that the first network problem is not resolved.

Optionally, in this embodiment of this application, the first verification instruction may include at least one of the following: the identifier of the service to which the first network problem belongs, an identifier of the first network problem, an identifier of the first solution, an area location identifier, a manipulation instruction, execution time, and configuration information corresponding to the first solution. For example, the area location identifier may be a cell location identifier, and may indicate a cell in which the network problem, for example, a network alarm problem, occurs. For example, the manipulation instruction may be an instruction for adjusting transmit power of a cell. For example, the execution time may be time at which the device configured with the digital twin network simulates the first solution. For example, the configuration information corresponding to the first solution may be information required by the device configured with the digital twin network to simulate the first solution. The first solution may be verified digitally in the digital twin network based on the configuration information corresponding to the first solution. If the verification result indicates that the problem is not resolved, the solution may not be applied to a physical network. This can save resources for implementing the solution in the physical network.

Optionally, in this embodiment of this application, the first verification result may include at least one of the following: the identifier of the service to which the first network problem belongs, the identifier of the first network problem, the identifier of the first solution, the area location identifier, and network status information. For example, the network status information may be information such as an average SINR of a user.

In the method for verifying the solution to the network problem provided in this embodiment of this application, the device configured with the knowledge graph sends, to the device configured with the digital twin network, the first verification instruction instructing the device configured with the digital twin network to simulate execution of the first solution corresponding to the first network device. The device configured with the digital twin network simulates the first solution according to the first verification instruction, and then sends the first verification result to the device configured with the knowledge graph, so that the device configured with the digital twin network simulates and verifies the first solution corresponding to the first network problem, and sends the first verification result. Both the first network problem and the first solution are output by the LLM, and the LLM has a powerful capability of outputting a network problem and a corresponding solution, so that the device configured with the knowledge graph can construct a complete knowledge graph based on the network problem and the corresponding solution that are output by the LLM. Further, the device configured with the digital twin network verifies a solution in the knowledge graph, and feeds back a verification result to the device configured with the knowledge graph. This can further update the knowledge graph in the device configured with the knowledge graph, and improve reliability of a solution corresponding to a network problem obtained by a user.

Further, as shown in FIG. 7, optionally, when the first verification result indicates that the first network problem is resolved, the method for verifying the solution to the network problem provided in this embodiment of this application further includes the following steps.

S751: The device configured with the knowledge graph sends first indication information to the management and control center. Correspondingly, the management and control center receives the first indication information from the device configured with the knowledge graph.

In this embodiment of this application, the first indication information indicates the management and control center to apply the first solution to the real network.

S752: The management and control center sends second feedback information to the device configured with the knowledge graph. Correspondingly, the device configured with the knowledge graph receives the second feedback information from the management and control center.

In this embodiment of this application, the second feedback information indicates a result obtained by applying the first solution to the real network. For example, if the average SINR of the user is less than or equal to 0 dB (that is, the first network problem exists) in the real network, after power control is performed in the real network by using the DQN-based power control algorithm (namely, the first solution corresponding to the first network problem), the average SINR of the user is greater than 0 dB, that is, the result obtained by applying the first solution to the real network (for example, the result is that the network problem in the real network is resolved) can be obtained. Alternatively, for example, if the average SINR of the user is less than or equal to 0 dB (that is, the first network problem exists) in the real network, after power control is performed in the real network by using the DQN-based power control algorithm (namely, the first solution corresponding to the first network problem), the average SINR of the user is still less than or equal to 0 dB, that is, the result obtained by applying the first solution to the real network (the result is not good, or the result is that the network problem in the real network is not resolved) can be obtained. S753: The device configured with the knowledge graph updates the knowledge graph based on the second feedback information.

For example, that the device configured with the knowledge graph updates the knowledge graph based on the second feedback information may be that the device configured with the knowledge graph increases or decreases, based on the second feedback information, a weight corresponding to the first solution in the knowledge graph. For example, in the example in FIG. 8 or FIG. 9, if the second feedback information indicates that the first network problem is resolved after the first solution is applied to the real network, the weight corresponding to the first solution in the knowledge graph is increased. Optionally, when the device configured with the knowledge graph receives, a specific quantity of times, the second feedback information indicating that the first network problem is resolved after the first solution is applied to the real network, the device configured with the knowledge graph increases the weight corresponding to the first solution in the knowledge graph. For example, when the second feedback information indicating that the first network problem is resolved after the first solution is applied to the real network reaches 1000 times, the device configured with the knowledge graph increases the weight corresponding to the first solution in the knowledge graph by 0.1. Alternatively, optionally, each time the device configured with the knowledge graph receives the second feedback information indicating that the first network problem is resolved after the first solution is applied to the real network, the device configured with the knowledge graph increases the weight corresponding to the first solution in the knowledge graph. For example, each time the device configured with the knowledge graph receives the second feedback information indicating that the first network problem is resolved after the first solution is applied to the real network, the device configured with the knowledge graph increases the weight corresponding to the first solution in the knowledge graph by 0.0001. A description of decreasing, by the device configured with the knowledge graph, the weight corresponding to the first solution in the knowledge graph is similar to this, and is not described herein.

For example, that the device configured with the knowledge graph updates the knowledge graph based on the second feedback information may be that the device configured with the knowledge graph updates a topology structure of the knowledge graph based on the second feedback information. For example, as shown in FIG. 8 or FIG. 9, if the second feedback information indicates that the first network problem is not resolved after the first solution is applied to the real network, a branch corresponding to the first solution in the knowledge graph is removed. Optionally, when the device configured with the knowledge graph receives, a specific quantity of times, the second feedback information indicating that the first network problem is not resolved after the first solution is applied to the real network, the device configured with the knowledge graph removes the branch corresponding to the first solution in the knowledge graph. For example, when the second feedback information indicating that the first network problem is not resolved after the first solution is applied to the real network reaches 1000 times, the device configured with the knowledge graph removes the branch corresponding to the first solution in the knowledge graph.

Alternatively, as shown in FIG. 7, optionally, when the first verification result indicates that the first network problem is not resolved, the method for verifying the solution to the network problem provided in this embodiment of this application further includes the following steps.

S761: The device configured with the knowledge graph determines, from the knowledge graph based on the identifier of the service to which the first network problem belongs, a second solution corresponding to the first network problem. In this embodiment of this application, the second solution is one of the one or more solutions corresponding to the first network problem.

S762: The device configured with the knowledge graph sends a second verification instruction to the device configured with the digital twin network. Correspondingly, the device configured with the digital twin network receives the second verification instruction from the device configured with the knowledge graph.

In this embodiment of this application, the second verification instruction instructs the device configured with the digital twin network to simulate execution of the second solution corresponding to the first network problem.

S763: The device configured with the digital twin network sends a second verification result to the device configured with the knowledge graph. Correspondingly, the device configured with the knowledge graph receives the second verification result from the device configured with the digital twin network.

In this embodiment of this application, the second verification result is a result obtained by the device configured with the digital twin network by executing the second solution corresponding to the first network problem.

It should be understood that steps S761 to S763 may be repeatedly performed until a verification result sent by the device configured with the digital twin network to the device configured with the knowledge graph indicates that the first network problem is resolved, or a verification result indicates that the first network problem is not resolved but a quantity of simulation times of the device configured with the digital twin network reaches a second threshold.

For example, the device configured with the knowledge graph may update the knowledge graph based on the second verification result, and specifically, update a topology structure of the knowledge graph based on the second verification result. For how the device configured with the knowledge graph updates the knowledge graph, refer to step S753. Details are not described herein.

Optionally, as shown in FIG. 7, the method for verifying the solution to the network problem provided in this embodiment of this application may further include the following step.

S770: The device configured with the knowledge graph sends first feedback information to the management and control center. Correspondingly, the management and control center receives the first feedback information from the device configured with the knowledge graph.

In this embodiment of this application, the first feedback information indicates that a verification service corresponding to the first network problem is completed.

In a possible implementation, that the verification service corresponding to the first network problem is completed may be that the first network problem is resolved, and the management and control center can learn of an operation of the physical network based on the first feedback information after the verification service is completed. In another possible implementation, that the verification service corresponding to the first network problem is completed may be that the verification result from the device configured with the digital twin network indicates that the first network problem is not resolved but the quantity of simulation times of the device configured with the digital twin network reaches the second threshold, the management and control center can learn of that the verified solution corresponding to the first network problem cannot be applied to the physical network, and this avoids a waste of resources caused by applying the infeasible solution to the physical network.

Optionally, as shown in FIG. 7, the method for verifying the solution to the network problem provided in this embodiment of this application may further include the following step.

S780: The device configured with the knowledge graph updates the knowledge graph based on the first verification result.

For example, that the device configured with the knowledge graph updates the knowledge graph based on the first verification result may be increasing or decreasing, based on the first verification result, the weight corresponding to the first solution in the knowledge graph. Alternatively, for example, that the device configured with the knowledge graph updates the knowledge graph based on the first verification result may be updating the topology structure of the knowledge graph based on the first verification result. For how the device configured with the knowledge graph updates the knowledge graph, refer to step S753. Details are not described herein.

Optionally, the device configured with the LLM may retrain the LLM based on the first verification result, so that a solution output by the LLM after retraining is more reliable.

It should be noted that step S780 is performed after step S740, and a sequence of step S780 and an optional step other than steps S710 to S740 is not limited.

For ease of understanding by a reader, the following describes, by using a specific instance, a method for verifying a solution to a network problem according to an embodiment of this application. The example includes the following content.
1. In a real network, an average SINR of a user is less than or equal to 0 dB. For example, a network element in a core network in the real network sends alarm information to a management and control center, and the alarm information indicates that the average SINR of the user is less than or equal to 0 dB.
2. The management and control center receives the alarm information, generates an identifier, for example, IDa, of a service to which a first network problem corresponding to the alarm information belongs, and sends IDa to a device configured with a knowledge graph. Correspondingly, the device configured with the knowledge graph analyzes, based on IDa, a cause why the network problem corresponding to IDa, that is, the average SINR of the user is less than or equal to 0 dB, analyzes, based on various data, that the cause is most likely to be an inter-cell interference problem, and sets the cause as the first network problem ID1. The device configured with the knowledge graph determines, from the knowledge graph corresponding to the first network problem ID1, a first solution (for example, power control by using a DQN power control algorithm) corresponding to the first network problem ID1, and sets the first solution as id1.
3. The device configured with the knowledge graph sends a first verification instruction to a device configured with a digital twin network, where the first verification instruction includes IDa, ID1, and id1. Optionally, the first verification instruction further includes at least one of an area location identifier (namely, a cell location identifier), a manipulation instruction (namely, power control by using a power control algorithm), execution time (namely, time for executing the manipulation instruction), and collection information setting information (namely, related data of a cell related to the first solution).
4. The device configured with the digital twin network simulates the first solution corresponding to id1.
5. The device configured with the digital twin network sends a first verification result to the device configured with the knowledge graph. Optionally, the first verification result includes a result indicating whether the first solution corresponding to id1 resolves the problem that the average SINR of the user is less than or equal to 0 dB after the device configured with the digital twin network performs simulation. In a possible implementation, the first verification result indicates that the average SINR of the user is greater than 0 dB after the device configured with the digital twin network performs simulation, and the device configured with the knowledge graph may increase a weight of the first solution in the knowledge graph based on the first verification result; or the first verification result indicates that the average SINR of the user is less than or equal to 0 dB after the device configured with the digital twin network performs simulation, and the device configured with the knowledge graph may decrease a weight of the first solution in the knowledge graph based on the first verification result.
6. In step 5, if the first verification result indicates that the average SINR of the user is less than or equal to 0 dB after the device configured with the digital twin network performs simulation, the device configured with the knowledge graph determines, from the knowledge graph corresponding to the first network problem ID1, a second solution (namely, power control by using a control channel-based power control algorithm) corresponding to a second network problem ID2, and sets the second solution to id2. The device configured with the knowledge graph sends a second verification instruction to the device configured with the digital twin network, to obtain a second verification result. A process is similar to steps 3 to 5, and details are not described herein.
7. If the first verification result in steps 3 to 5 indicates that the average SINR of the user is greater than 0 dB after the device configured with the digital twin network performs simulation, or if the first verification result in steps 3 to 5 indicates that the average SINR of the user is less than or equal to 0 dB after the device configured with the digital twin network performs simulation but a verification result obtained after one or more times of step 6 indicates that the average SINR of the user is greater than 0 dB after the device configured with the digital twin network performs simulation, or if the average SINR of the user is still less than or equal to 0 dB after the device configured with the digital twin network performs simulation but a quantity of times of step 6 exceeds a first threshold, the device configured with the knowledge graph sends first feedback information to the management and control center, where the first feedback information indicates that a verification service corresponding to the IDa is completed.
8. If the average SINR of the user is greater than 0 dB after power control is performed by using the DQN power control algorithm and the device configured with the digital twin network performs simulation, the device configured with the knowledge graph may send first indication information to the management and control center, where the first indication information indicates to perform power control by using the DQN power control algorithm. Further, the management and control center may indicate the real network to apply the solution of performing power control by using the DQN power control algorithm to the network problem that the average SINR of the user is less than or equal to 0 dB.
9. Power control is performed by using the DQN power control algorithm in the real network, the average SINR of the user is greater than 0 dB, and the real network may feed back to the management and control center. Further, the management and control center sends second feedback information to the device configured with the knowledge graph, where the second feedback information indicates that power control is performed by using the DQN power control algorithm in the real network and the average SINR of the user is greater than 0 dB. Further, the device configured with the knowledge graph may increase, based on the second feedback information, the weight of the first solution corresponding to power control by using the DQN power control algorithm, namely, id1, in the knowledge graph.

The method 500 mainly describes the solution provided in embodiments of this application from a perspective of interaction between the device configured with the LLM, the device configured with the digital twin network, and the management and control center. Correspondingly, embodiments of this application further provide a communication apparatus, and the communication apparatus is configured to implement the foregoing various methods. The communication apparatus may be the device configured with the LLM in the foregoing method embodiments, or an apparatus including the device configured with the LLM, or a component that can be used in the device configured with the LLM; or the communication apparatus may be the device configured with the digital twin network in the foregoing method embodiments, or an apparatus including the device configured with the digital twin network, or a component that can be used in the device configured with the digital twin network. It can be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

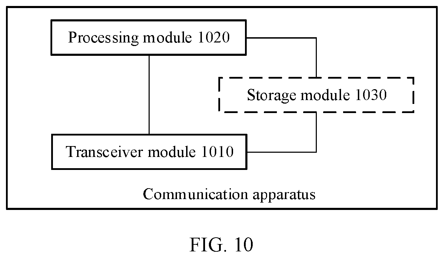

In embodiments of this application, the communication apparatus may be divided into functional modules based on the embodiment of the foregoing method 500. For example, each functional module may be obtained through division based on each corresponding function, or two or more functions may be integrated into one processing module. The integrated module may be implemented in a form of hardware, or may be implemented in a form of a software functional module. It should be understood that division into the modules in embodiments of this application is an example, and is only logical function division. During actual implementation, there may be another division manner. For example, FIG. 10 is a diagram of a communication apparatus according to an embodiment of this application. For example, the communication apparatus is the device configured with the LLM in the foregoing method embodiments (which may be a chip of the device configured with the LLM, a module of the device configured with the LLM, or an internal apparatus of the device configured with the LLM). The device configured with the LLM includes a transceiver module 1010 and a processing module 1020. The transceiver module 1010 may also be referred to as a transceiver unit, is configured to implement receiving and sending functions, and for example, may be a transceiver circuit, a transceiver machine, a transceiver, or a communication interface.

In a solution, the transceiver module 1010 is configured to input, into a device configured with a digital twin network, a solution corresponding to each network problem in a plurality of problem pairs, where the plurality of problem pairs include a network problem in a network management dataset and a solution corresponding to the network problem. The transceiver module 1010 is further configured to receive, from the device configured with the digital twin network, a score of the solution corresponding to each network problem, where the score is obtained by the device configured with the digital twin network in performing verification on the solution corresponding to each problem and performing evaluation based on a verification result.

The processing module 1020 is configured to perform model training based on the plurality of problem pairs and the score of the solution corresponding to each network problem, to obtain a large language model LLM.

In this embodiment of this application, the LLM includes a network policy model, and the network policy model is obtained through training based on the plurality of problem pairs.

In this embodiment of this application, the LLM includes a reward model, and the reward model is obtained through training based on the plurality of problem pairs and the score of the solution corresponding to each network problem in the plurality of problem pairs.

All related content of the steps in the foregoing method embodiments may be cited in function descriptions of the corresponding functional modules. Details are not described herein. Optionally, the communication apparatus may further include a storage module 1030. The storage module 1030 may be configured to store instructions and/or data. The processing module 1020 may read the instructions and/or the data in the storage module 1030.

In this embodiment of this application, the device configured with the LLM is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In an embodiment, a person skilled in the art may figure out that the device configured with the LLM may be in a form of the communication apparatus 400 shown in FIG. 4.

The device configured with the LLM (which may be the chip of the device configured with the LLM, the module of the device configured with the LLM, or the internal apparatus of the device configured with the LLM) provided in this embodiment of this application can perform the foregoing model training method. Therefore, for technical effect that can be obtained by the device configured with the LLM, refer to the foregoing method embodiment. Details are not described herein.

Alternatively, for example, FIG. 10 is a diagram of a communication apparatus according to an embodiment of this application. The communication apparatus is the device configured with the digital twin network (which may be a chip of the device configured with the digital twin network, a module of the device configured with the digital twin network, or an internal apparatus of the device configured with the digital twin network) in the foregoing method embodiments. The device configured with the digital twin network includes a transceiver module 1010 and a processing module 1020. The transceiver module 1010 may also be referred to as a transceiver unit, is configured to implement receiving and sending functions, and for example, may be a transceiver circuit, a transceiver machine, a transceiver, or a communication interface.

In a solution, the transceiver module 1010 is configured to receive, from a device configured with an LLM, a solution corresponding to each network problem in a plurality of problem pairs, where the plurality of problem pairs include a network problem in a network management dataset and a solution corresponding to the network problem.

The transceiver module 1010 is further configured to send, to the device configured with the LLM, a score of the solution corresponding to each network problem, where the score is obtained by the device configured with the digital twin network in performing verification on the solution corresponding to each problem and performing evaluation based on a verification result.

All related content of the steps in the foregoing method embodiments may be cited in function descriptions of the corresponding functional modules. Details are not described herein. Optionally, the communication apparatus may further include a storage module 1030. The storage module 1030 may be configured to store instructions and/or data. The processing module 1020 may read the instructions and/or the data in the storage module 1030.

In this embodiment of this application, the device configured with the digital twin network is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In an embodiment, a person skilled in the art may figure out that the device configured with the digital twin network may be in a form of the communication apparatus 400 shown in FIG. 4.

The device configured with the digital twin network (which may be the chip of the device configured with the digital twin network, the module of the device configured with the digital twin network, or the internal apparatus of the device configured with the digital twin network) provided in this embodiment of this application can perform the foregoing model training method. Therefore, for technical effect that can be obtained by the device configured with the digital twin network, refer to the foregoing method embodiment. Details are not described herein.

The method 700 mainly describes the solution provided in embodiments of this application from a perspective of interaction between the device configured with the knowledge graph and the device configured with the digital twin network. Correspondingly, embodiments of this application further provide a communication apparatus, and the communication apparatus is configured to implement the foregoing various methods. The communication apparatus may be the device configured with the knowledge graph in the foregoing method embodiments, or an apparatus including the device configured with the knowledge graph, or a component that can be used in the device configured with the knowledge graph; or the communication apparatus may be the device configured with the digital twin network in the foregoing method embodiments, or an apparatus including the device configured with the digital twin network, or a component that can be used in the device configured with the digital twin network. It can be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the embodiment of the foregoing method 700. For example, each functional module may be obtained through division based on each corresponding function, or two or more functions may be integrated into one processing module. The integrated module may be implemented in a form of hardware, or may be implemented in a form of a software functional module. It should be understood that division into the modules in embodiments of this application is an example, and is only logical function division. During actual implementation, there may be another division manner. For example, FIG. 10 is a diagram of a communication apparatus according to an embodiment of this application. For example, the communication apparatus is the device configured with the knowledge graph in the foregoing method embodiments (which may be a chip of the device configured with the knowledge graph, a module of the device configured with the knowledge graph, or an internal apparatus of the device configured with the knowledge graph). The device configured with the knowledge graph includes a transceiver module 1010 and a processing module 1020. The transceiver module 1010 may also be referred to as a transceiver unit, is configured to implement receiving and sending functions, and for example, may be a transceiver circuit, a transceiver machine, a transceiver, or a communication interface.

In a solution, the transceiver module 1010 is configured to receive, from a management and control center, an identifier of a service to which a first network problem belongs.

The processing module 1020 is configured to determine, from the knowledge graph based on the identifier of the first network problem, a first solution corresponding to the first network problem, where the knowledge graph includes solutions to a plurality of network problems output by a large language model LLM, the first network problem is one of the plurality of network problems, and the first solution is one of one or more solutions corresponding to the first network problem.

The transceiver module 1010 is further configured to send a first verification instruction to a device configured with a digital twin network, where the first verification instruction instructs the device configured with the digital twin network to simulate execution of the first solution corresponding to the first network problem.

The transceiver module 1010 is further configured to receive a first verification result from the device configured with the digital twin network, where the first verification result is a result obtained by the device configured with the digital twin network in executing the first solution corresponding to the first network problem.

All related content of the steps in the foregoing method embodiments may be cited in function descriptions of the corresponding functional modules. Details are not described herein. Optionally, the communication apparatus may further include a storage module 1030. The storage module 1030 may be configured to store instructions and/or data. The processing module 1020 may read the instructions and/or the data in the storage module 1030.

In this embodiment of this application, the device configured with the knowledge graph is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In an embodiment, a person skilled in the art may figure out that the device configured with the knowledge graph may be in a form of the communication apparatus 400 shown in FIG. 4.

The device configured with the knowledge graph (which may be the chip of the device configured with the knowledge graph, the module of the device configured with the knowledge graph, or the internal apparatus of the device configured with the knowledge graph) provided in this embodiment of this application can perform the foregoing method for verifying the solution to the network problem. Therefore, for technical effect that can be obtained by the device configured with the knowledge graph, refer to the foregoing method embodiment. Details are not described herein.

In a solution, the transceiver module 1010 is configured to receive a first verification instruction from the device configured with the knowledge graph, where the first verification instruction instructs the device configured with the digital twin network to simulate execution of the first solution corresponding to the first network problem, the first solution corresponding to the first network problem is determined by the device configured with the knowledge graph from the knowledge graph based on the identifier of the service to which the first network problem belongs, the knowledge graph includes the solutions to the plurality of network problems output by the large language model LLM, the first network problem is one of the plurality of network problems, and the first solution is one of one or more solutions corresponding to the first network problem.

The transceiver module 1010 is further configured to send a first verification result to the device configured with the knowledge graph, where the first verification result is a result obtained by the device configured with the digital twin network in executing the first solution corresponding to the first network problem.

All related content of the steps in the foregoing method embodiments may be cited in function descriptions of the corresponding functional modules. Details are not described herein. Optionally, the communication apparatus may further include a storage module 1030. The storage module 1030 may be configured to store instructions and/or data. The processing module 1020 may read the instructions and/or the data in the storage module 1030.

In this embodiment of this application, the device configured with the LLM is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In an embodiment, a person skilled in the art may figure out that the device configured with the digital twin network may be in a form of the communication apparatus 400 shown in FIG. 4.

The device configured with the digital twin network (which may be the chip of the device configured with the digital twin network, the module of the device configured with the digital twin network, or the internal apparatus of the device configured with the digital twin network) provided in this embodiment of this application can perform the foregoing model training method. Therefore, for technical effect that can be obtained by the device configured with the digital twin network, refer to the foregoing method embodiment. Details are not described herein.

The processor 401 in the communication apparatus 400 shown in FIG. 4 may invoke the computer-executable instructions stored in the memory 403, to enable the communication apparatus 400 to perform the foregoing method for verifying the solution to the network problem in the foregoing method embodiments.

Specifically, a function/an implementation process of the transceiver module 1010 and the processing module 1020 in FIG. 10 may be implemented by invoking, by the processor 401 in the communication apparatus 400 shown in FIG. 4, the computer-executable instructions stored in the memory 403. Alternatively, a function/an implementation process of the processing module 1020 in FIG. 10 may be implemented by invoking, by the processor 401 in the communication apparatus 400 shown in FIG. 4, the computer-executable instructions stored in the memory 403, and a function/an implementation process of the transceiver module 1010 in FIG. 10 may be implemented through the communication interface 404 in the communication apparatus 400 shown in FIG. 4.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built in an SoC or ASIC, or may be an independent semiconductor chip. In addition to a core for executing software instructions to perform operations or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, a memory may not in the communication apparatus. When the communication apparatus is a chip system, the communication apparatus may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is caused to perform the method according to any one of the foregoing method embodiments or any implementation of the method embodiment.

Optionally, an embodiment of this application further provides a communication system. The communication system includes the first network device in the foregoing method embodiment and the terminal device in the foregoing method embodiment.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the scope of this application. Correspondingly, the specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for verifying a solution to a network problem, wherein the method comprises:
obtaining an identifier of a service to which a first network problem belongs;
determining, from a knowledge graph based on the identifier of the service to which the first network problem belongs, a first solution corresponding to the first network problem, wherein the knowledge graph comprises solutions to a plurality of network problems output by a large language model LLM, the first network problem is one of the plurality of network problems, and the first solution is one of one or more solutions corresponding to the first network problem;
sending a first verification instruction to a device configured with a digital twin network, wherein the first verification instruction instructs the device configured with the digital twin network to simulate execution of the first solution corresponding to the first network problem; and
receiving a first verification result from the device configured with the digital twin network, wherein the first verification result is a result obtained by the device configured with the digital twin network in executing the first solution corresponding to the first network problem.

2. The method according to claim 1, wherein obtaining the identifier of the service to which the first network problem belongs comprises:
receiving the identifier of the service to which the first network problem belongs from a management and control center.

3. The method according to claim 1 or 2, wherein the first verification result indicates that the first network problem is resolved, and the method further comprises:
sending first feedback information to the management and control center, wherein the first feedback information indicates that a verification service corresponding to the first network problem is completed.

4. The method according to any one of claims 1 to 3, wherein the first verification result indicates that the first network problem is not resolved, and the method further comprises:
determining, from the knowledge graph based on the identifier of the service to which the first network problem belongs, a second solution corresponding to the first network problem, wherein the second solution is one of the one or more solutions corresponding to the first network problem;
sending a second verification instruction to the device configured with the digital twin network, wherein the second verification instruction instructs the device configured with the digital twin network to simulate execution of the second solution corresponding to the first network problem; and
receiving a second verification result from the device configured with the digital twin network, wherein the second verification result is a result obtained by the device configured with the digital twin network in executing the second solution corresponding to the first network problem.

5. The method according to any one of claims 1 to 4, wherein the method further comprises:
updating the knowledge graph based on the first verification result.

6. The method according to claim 5, wherein updating the knowledge graph based on the first verification result comprises:
increasing or decreasing, based on the first verification result, a weight corresponding to the first solution in the knowledge graph, or updating a topology structure of the knowledge graph based on the first verification result.

7. The method according to any one of claims 1 to 6, wherein the LLM is obtained through training based on a plurality of problem pairs, or the LLM is obtained through training based on a plurality of problem pairs and a score of a solution corresponding to each network problem, the score is obtained by inputting the solution corresponding to each problem into the device configured with the digital twin network for simulation, and the plurality of problem pairs comprise a network problem in a network management dataset and a solution corresponding to the network problem.

8. The method according to any one of claims 1 to 7, wherein the first verification result indicates that the first network problem is resolved, and the method further comprises:
sending first indication information to the management and control center, wherein the first indication information indicates the management and control center to apply the first solution to a real network;
receiving second feedback information from the management and control center, wherein the second feedback information indicates a result of applying the first solution to the real network; and
updating the knowledge graph based on the second feedback information.

9. The method according to any one of claims 1 to 8, wherein the first network problem comprises at least one of the following: a network alarm problem, a user complaint problem, and an optimization requirement problem.

10. The method according to any one of claims 1 to 9, wherein the first verification instruction comprises at least one of the following:
the identifier of the service to which the first network problem belongs, an identifier of the first network problem, an identifier of the first solution, an area location identifier, a manipulation instruction, execution time, and collection information setting information; and
the first verification result comprises at least one of the following:
the identifier of the service to which the first network problem belongs, the identifier of the first network problem, the identifier of the first solution, the area location identifier, and network status information.

11. A system for verifying a solution to a network problem, comprising a device configured with a knowledge graph and a device configured with a digital twin network, wherein
the device configured with the knowledge graph is configured to: obtain an identifier of a service to which a first network problem belongs, and determine, from the knowledge graph based on the identifier of the service to which the first network problem belongs, a first solution corresponding to the first network problem, wherein the knowledge graph comprises solutions to a plurality of network problems output by a large language model LLM, the first network problem is one of the plurality of network problems, and the first solution is one of one or more solutions corresponding to the first network problem;
the device configured with the knowledge graph is further configured to send a first verification instruction to the device configured with the digital twin network, wherein the first verification instruction instructs the device configured with the digital twin network to simulate execution of the first solution corresponding to the first network problem;
the device configured with the digital twin network is configured to: receive the first verification instruction from the device configured with the knowledge graph, simulate execution of the first solution according to the first verification instruction, and then send a first verification result to the device configured with the knowledge graph, wherein the first verification result is a result obtained by the device configured with the digital twin network in executing the first solution corresponding to the first network problem; and
the device configured with the knowledge graph is further configured to receive the first verification result from the device configured with the digital twin network.

12. The system according to claim 11, wherein the first verification result indicates that the first network problem is resolved; and
the device configured with the knowledge graph is further configured to send first feedback information to the management and control center, wherein the first feedback information indicates that a verification service corresponding to the first network problem is completed.

13. The system according to claim 11 or 12, wherein the first verification result indicates that the first network problem is not resolved;
the device configured with the knowledge graph is further configured to determine, from the knowledge graph based on the identifier of the first network problem, a second solution corresponding to the first network problem, wherein the second solution is one of the one or more solutions corresponding to the first network problem;
the device configured with the knowledge graph is further configured to send a second verification instruction to the device configured with the digital twin network, wherein the second verification instruction instructs the device configured with the digital twin network to simulate execution of the second solution corresponding to the first network problem;
the device configured with the digital twin network is further configured to: receive the second verification instruction from the device configured with the knowledge graph, simulate execution of the second solution according to the second verification instruction, and then send a second verification result to the device configured with the knowledge graph; and
the device configured with the knowledge graph is further configured to receive the second verification result from the device configured with the digital twin network.

14. The system according to any one of claims 11 to 13, wherein the device configured with the knowledge graph is further configured to update the knowledge graph based on the first verification result, and/or update the LLM based on the first verification result.

15. The system according to claim 14, wherein that the device configured with the knowledge graph is further configured to update the knowledge graph based on the first verification result comprises:
the device configured with the knowledge graph is further configured to increase or decrease, based on the first verification result, a weight corresponding to the first solution in the knowledge graph, or update a topology structure of the knowledge graph based on the first verification result.

16. The system according to any one of claims 11 to 15, wherein the LLM is obtained through training based on a plurality of problem pairs, or the LLM is obtained through training based on a plurality of problem pairs and a score of a solution corresponding to each problem, the score is obtained by inputting the solution corresponding to each problem into the device configured with the digital twin network for simulation, and the plurality of problem pairs comprise a network problem in a network management dataset and a solution corresponding to the network problem.

17. The system according to any one of claims 11 to 16, wherein the first verification result indicates that the first network problem is resolved;
the device configured with the knowledge graph is further configured to send first indication information to the management and control center, wherein the first indication information indicates the management and control center to apply the first solution to a real network; and
the device configured with the knowledge graph is further configured to: receive second feedback information from the management and control center, and update the knowledge graph based on the second feedback information, wherein the second feedback information indicates a result obtained by applying the first solution to the real network.

18. The system according to any one of claims 11 to 17, wherein the first network problem comprises at least one of the following: a network alarm problem, a user complaint problem, and an optimization requirement problem.

19. The system according to any one of claims 11 to 18, wherein the first verification instruction comprises at least one of the following:
the identifier of the service to which the first network problem belongs, an identifier of the first network problem, an identifier of the first solution, an area location identifier, a manipulation instruction, execution time, and collection information setting information; and
the first verification result comprises at least one of the following:
the identifier of the service to which the first network problem belongs, the identifier of the first network problem, the identifier of the first solution, the area location identifier, and network status information.

20. A model training method, comprising:
inputting, into a device configured with a digital twin network, a solution corresponding to each network problem in a plurality of problem pairs, wherein the plurality of problem pairs comprise a network problem in a network management dataset and a solution corresponding to the network problem;
receiving, from the device configured with the digital twin network, a score of the solution corresponding to each network problem, wherein the score is obtained by the device configured with the digital twin network in performing verification on the solution corresponding to each problem and performing evaluation based on a verification result; and
performing model training based on the plurality of problem pairs and the score of the solution corresponding to each network problem, to obtain a large language model LLM.

21. The method according to claim 20, wherein the LLM comprises a network policy model, and the network policy model is obtained through training based on the plurality of problem pairs.

22. The method according to claim 20 or 21, wherein the LLM comprises a reward model, and the reward model is obtained through training based on the plurality of problem pairs and the score of the solution corresponding to each network problem in the plurality of problem pairs.

23. A communication apparatus, comprising:
a transceiver module, configured to obtain an identifier of a service to which a first network problem belongs;
a processing module, configured to determine, from a knowledge graph based on the identifier of the first network problem, a first solution corresponding to the first network problem, wherein the knowledge graph comprises solutions to a plurality of network problems output by a large language model LLM, the first network problem is one of the plurality of network problems, and the first solution is one of one or more solutions corresponding to the first network problem;
the transceiver module is further configured to send a first verification instruction to a device configured with a digital twin network, wherein the first verification instruction instructs the device configured with the digital twin network to simulate execution of the first solution corresponding to the first network problem; and
the transceiver module is further configured to receive a first verification result from the device configured with the digital twin network, wherein the first verification result is a result obtained by the device configured with the digital twin network in executing the first solution corresponding to the first network problem.

24. A communication apparatus, comprising:
a transceiver module, configured to input, into a device configured with a digital twin network, a solution corresponding to each network problem in a plurality of problem pairs, wherein the plurality of problem pairs comprise a network problem in a network management dataset and a solution corresponding to the network problem; and
the transceiver module is configured to receive, from the device configured with the digital twin network, a score of the solution corresponding to each network problem, wherein the score is obtained by the device configured with the digital twin network in performing verification on the solution corresponding to each problem and performing evaluation based on a verification result; and
a processing module, configured to perform model training based on the plurality of problem pairs and the score of the solution corresponding to each network problem, to obtain a large language model LLM.

25. A communication apparatus, wherein the communication apparatus comprises a module configured to perform the method according to any one of claims 1 to 10.

26. A communication apparatus, wherein the communication apparatus comprises a module configured to perform the method according to any one of claims 20 to 22.

27. A computer-readable storage medium, wherein the computer-readable storage medium comprises instructions, and when the instructions are run, the method according to any one of claims 1 to 10 is implemented.

28. A computer-readable storage medium, wherein the computer-readable storage medium comprises instructions, and when the instructions are run, the method according to any one of claims 20 to 22 is implemented.

29. A computer program product, wherein the computer program product comprises instructions, and when the instructions are run, the method according to any one of claims 1 to 10 is implemented.

30. A computer program product, wherein the computer program product comprises instructions, and when the instructions are run, the method according to any one of claims 20 to 22 is implemented.
